# EUROPÄISCHE PATENTSCHRIFT

(11) **EP 2 849 318 B1**
(45) Veröffentlichungstag und Bekanntmachung des Hinweises auf die Patenterteilung: **07.03.2018**
(21) Anmeldenummer: 14179798.5
(22) Anmeldetag: 05.08.2014
(51) Int. Cl.: H02K 11/00, B60L 11/14, B60L 11/18, B60L 1/02, B60L 3/00, B60K 11/02, B60K 1/00

(54) **Elektrische Antriebseinheit für Fahrzeuge**
Electric power for vehicles
Unité de propulsion électrique pour véhicules

(30) Priorität: 11.09.2013 DE 102013218126
(43) Veröffentlichungstag der Anmeldung: 18.03.2015
(73) Patentinhaber: ROBERT BOSCH GMBH, 70442 Stuttgart (DE)
(72) Erfinder: Moll, Steffen, 73730 Esslingen (DE); Ince, Cafer, 71679 Asperg (DE)

(56) Entgegenhaltungen:
- DE-A1-102010 002 068
- DE-A1-102010 048 131
- US-A1- 2009 206 709
- US-A1- 2012 274 158

## Beschreibung

### Gebiet der Erfindung

Die Erfindung betrifft eine Antriebseinheit für ein Fahrzeug sowie ein Fahrzeug mit einer solchen Antriebseinheit. Die Antriebseinheit kann insbesondere ausgeführt sein, ein Fahrzeug anzutreiben.

### Stand der Technik

Zum Antreiben von Fahrzeugen werden üblicherweise Verbrennungskraftmaschinen, Elektrokraftmaschinen oder Kombinationen dieser beiden Antriebsarten in Form eines sog. Hybridantriebs verwendet.

Zum Betreiben einer einzelnen Elektrokraftmaschine oder einer Elektrokraftmaschine im Rahmen eines Hybridantriebs wird ein Elektromotor sowie ein Inverter benötigt, der die erforderliche Energie für den Elektromotor aufbereitet und bereitstellt.

Dabei greift ein solcher Inverter üblicherweise auf Gleichstrom aus einer Batterie zurück, wandelt den Gleichstrom in einen Wechselstrom um und gibt diesen dann an den Elektromotor aus. Der Inverter kann dabei mit der Batterie mittels einer zweiphasigen Hochspannungsverbindung und mit dem Elektromotor mittels einer dreiphasigen Hochspannungsverbindung elektrisch verbunden sein.

Sowohl der Elektromotor als auch der Inverter erzeugen in einem Betriebszustand eine Wärmelast, welche abtransportiert werden muss, um den sicheren Betrieb dieser Komponenten nicht zu gefährden.

Die Druckschrift US2012274158 wird als nächstliegender Stand der Technik angesehen und offenbart die Merkmale der Präambel des unabhängigen Anspruchs 1.

### Offenbarung der Erfindung

Die Antriebseinheit wie im Folgenden beschrieben bietet einen räumlich kompakten Aufbau sowie eine erhöhte Resistenz gegen mechanische Belastungen, die beispielsweise aus Erschütterungen oder Wärmebelastungen resultieren können.

Werden der Elektromotor und der Inverter als separate Baugruppen gefertigt und montiert, so ist der Inverter über eine dreiphasige Verbindungsleitung mit dem Elektromotor elektrisch zu koppeln, um die Antriebsenergie bereit zu stellen. Die dreiphasige Verbindungsleitung kann durch Vibrationen während des Betriebs der Antriebseinheit oder eines angetriebenen Fahrzeugs oder durch Temperaturschwankungen einer hohen mechanischen Belastung ausgesetzt sein, welche beispielsweise die Gefahr einer gelösten Verbindung herbeiführen und damit die Betriebssicherheit der Antriebseinheit negativ beeinflussen kann.

Weiterhin kann es in Abhängigkeit von den Montagepositionen des Elektromotors und des Inverters im Rahmen von Wartungs- oder Reparaturarbeiten erforderlich sein, dass die dreiphasige Verbindungsleitung zwischen dem Inverter und dem Elektromotor gelöst werden muss, was insbesondere durch den Umstand der anliegenden hohen Spannung an dieser dreiphasigen Verbindungsleitung die Ausführung unter hohen Sicherheitsanforderungen durch Fachpersonal erfordern kann.

Je nach Position des Inverters kann es auch erforderlich sein, diesen gegen das Eindringen von Schmutzpartikeln oder Feuchtigkeit abzudichten, um seine Betriebssicherheit zu gewährleisten. Jede Schnittstelle des Inverters kann die Verwendung einer entsprechenden Abdichtung erfordern.

Gemäß einem Aspekt ist eine Antriebseinheit für ein Fahrzeug angegeben. Die Antriebseinheit weist einen Elektromotor und einen Inverter auf. Der Inverter ist ausgeführt, den Elektromotor mit einer Betriebsspannung zu versorgen. Die Antriebseinheit ist dadurch gekennzeichnet, dass der Elektromotor und der Inverter an einem gemeinsamen Kühlkreislauf angeschlossen sind, über welchen die in einem Betriebszustand der Antriebseinheit anfallenden Wärmelasten an dem Elektromotor und an dem Inverter abtransportiert werden.

Der Inverter und der Elektromotor sind so angeordnet, dass diese räumlich nahe beieinander liegen oder sogar aneinander grenzen. Insbesondere in einem montierten Zustand in einem Fahrzeug sind der Elektromotor und der Inverter unmittelbar aneinandergrenzend angeordnet.

Damit ermöglicht dieser Aufbau das Bereitstellen eines gemeinsamen Kühlkreislaufs für den Elektromotor und den Inverter. Die kompakte Bauweise wird hierdurch unterstützt, da eine Kühlmittelleitung samt Kühlmittel zum Kühlen der beiden Komponenten verwendet werden kann.

Die Kühlung des Inverters kann insbesondere mittels einer Kühlplatte erfolgen, durch die ein Kühlmittel in dem Kühlkreislauf verläuft und die Wärmelast abtransportiert.

Gemäß einer Ausführungsform ist der Inverter mit dem Elektromotor so mechanisch gekoppelt, dass der Inverter an dem Elektromotor fixiert ist.

Dies bedeutet, dass der Inverter und der Elektromotor als ein einzelnes Bauteil ausgeführt sind. Die mechanische Kopplung fixiert den Elektromotor und den Inverter mit Bezug zueinander und kann eine mechanische Belastung der elektrischen Verbindungsleitungen zwischen dem Inverter und dem Elektromotor reduzieren, was zu einer erhöhten Betriebssicherheit der Antriebseinheit beitragen kann.

Daneben kann die mechanische Kopplung des Elektromotors mit dem Inverter die Gefahr einer undichten Stelle an den elektrischen Verbindungspunkten zwischen dem Elektromotor und dem Inverter reduzieren, so dass die Betriebssicherheit hierdurch weiter erhöht werden kann.

Gemäß einer weiteren Ausführungsform ist der Inverter unmittelbar mit dem Elektromotor mechanisch gekoppelt.

Dies bedeutet, dass der Inverter und der Elektromotor mit einer mechanischen Verbindung aneinander befestigt sind, so dass beispielsweise diese beiden Komponenten eine einzelne Baugruppe darstellen.

In dieser Ausführungsform kann vollständig auf eine leitungsbasierte Verbindung zwischen den Komponenten verzichtet werden, da die elektrische Verbindung beispielsweise über Steckverbindungen, Kontaktverbindungen oder elektrisch leitfähige Schienen hergestellt werden kann.

Damit entfällt die Gefahr, dass durch mechanische Belastung einer Verbindungsleitung zwischen Elektromotor und Inverter die Betriebssicherheit beeinflusst werden kann, da es die elektrische Verbindung in Form einer Leitung gar nicht mehr gibt.

Ebenso kann ein Wartungsaufwand der Antriebseinheit reduziert werden, da gerade die Verbindungsleitung, welche einer hohen mechanischen Belastung ausgesetzt sein kann, entfällt.

Durch die unmittelbare mechanische Kopplung des Inverters mit dem Elektromotor entfällt darüber hinaus eine externe Schnittstelle des Inverters, was den Aufwand zum Abdichten gegen das Eindringen von Schmutzpartikeln oder Feuchtigkeit reduzieren kann, da nunmehr nur noch die Schnittstelle des Inverters zu der Batterie abgedichtet werden muss.

Gemäß einer weiteren Ausführungsform weist die Antriebseinheit ein Gehäuse auf, wobei der Elektromotor und der Inverter gemeinsam innerhalb des Gehäuses angeordnet sind.

Damit bilden der Elektromotor und der Inverter eine einzelne Baueinheit und können eine kompakte und vereinfachte Montage dieser Baueinheit ermöglichen. Ebenso kann dieser Aufbau einen Wartungsaufwand reduzieren.

Gemäß einer weiteren Ausführungsform weist die Antriebseinheit einen Wärmetauscher auf, wobei der Wärmetauscher mit dem gemeinsamen Kühlkreislauf gekoppelt ist und außerhalb des Gehäuses angeordnet ist.

Das Kühlmittel nimmt eine Wärmelast von dem Elektromotor und dem Inverter auf und gibt diese Wärmelast mittels des Wärmetauschers an die Umgebung ab.

Gemäß einer weiteren Ausführungsform weist die Antriebseinheit ein Kopplungselement auf, welches den Inverter mit dem Elektromotor mechanisch koppelt.

Das Kopplungselement ist ein Flansch welcher die beiden Komponenten Elektromotor und Inverter durch mechanische Kopplung unmittelbar miteinander verbindet. Damit werden beide Komponenten zu einer einzelnen Baugruppe verbunden.

Gemäß einer weiteren Ausführungsform ist das Kopplungselement ausgeführt, den Inverter mit dem Elektromotor über eine elektrische Verbindung elektrisch zu koppeln.

Die elektrische Verbindung ersetzt eine externe Verbindungsleitung, welche erforderlich ist, wenn der Elektromotor und der Inverter räumlich voneinander getrennt angeordnet bzw. montiert sind, so dass gerade der durch die externe Verbindungsleitung verursachte Wartungs- und Montageaufwand reduziert wird.

Gemäß einer weiteren Ausführungsform ist die elektrische Verbindung eine dreiphasige Hochspannungsverbindung.

Über eine solche dreiphasige Hochspannungsverbindung wird die Wechselspannung übertragen, welche von dem Inverter ausgehend von einer Gleichspannung einer Energiequelle, beispielsweise in Form einer Batterie, erzeugt wird.

Gemäß einer weiteren Ausführungsform verbindet das Kopplungselement einen ersten Abschnitt des gemeinsamen Kühlkreislaufs mit einem zweiten Abschnitt des gemeinsamen Kühlkreislaufs, wobei der erste Abschnitt des gemeinsamen Kühlkreislaufs angeordnet ist, eine Wärmelast von dem Elektromotor abzutransportieren und wobei der zweite Abschnitt des gemeinsamen Kühlkreislaufs angeordnet ist, eine Wärmelast von dem Inverter abzutransportieren.

In einem gekoppelten oder montierten Zustand der Antriebseinheit verbindet das Kopplungselement den durch den Elektromotor verlaufenden ersten Abschnitt des gemeinsamen Kühlkreislaufs mit dem durch den Inverter verlaufenden zweiten Abschnitt des gemeinsamen Kühlkreislaufs zu einem einzigen geschlossenen Kühlkreislauf, so dass durch diesen Kühlkreislauf ein Kühlmittel fließen kann und die in dem Elektromotor und dem Inverter anfallende Wärmelast über einen Wärmetauscher der Umgebung abführen kann.

Hierzu kann das Kopplungselement weist der Flansch zwei Durchbrüche auf welche in dem montierten Zustand der Antriebseinheit als Fluidkanäle ausgeführte Kühlkreisläufe in dem Elektromotor und in dem Inverter miteinander verbinden, so dass ein Kühlmittel ungehindert durch die Fluidkanäle fließen kann.

Das Kopplungselement kann als eigenes Schnittstellenelement getrennt von dem Elektromotor und dem Inverter ausgeführt sein. Alternativ kann das Kopplungselement integral mit dem Elektromotor oder dem Inverter ausgeführt sein und ein Ankoppeln der jeweils anderen Komponente ermöglichen.

Gemäß einer weiteren Ausführungsform weist die Antriebseinheit ein Gehäuse auf, wobei der Elektromotor und der Inverter gemeinsam innerhalb des Gehäuses angeordnet sind.

Gemäß einem weiteren Aspekt ist ein Fahrzeug mit einer Antriebseinheit wie oben und im Folgenden beschrieben angegeben. Dabei ist die Antriebseinheit ausgeführt, das Fahrzeug anzutreiben.

Bei dem Fahrzeug kann es sich um einen Personenkraftwagen oder um ein Nutzfahrzeug handeln. Die Antriebseinheit kann insbesondere als Teil eines Hybridantriebs für das Fahrzeug ausgeführt sein und gemeinsam mit einem Verbrennungsmotor die Antriebsenergie für ein Fahrzeug bereitstellen.

### Kurze Beschreibung der Zeichnungen

Im Folgenden werden mit Bezug zu den Zeichnungen Ausführungsbeispiele der Erfindung beschrieben. Dabei zeigen:
Fig. 1 eine schematische Darstellung einer Antriebseinheit.
Fig. 2 eine schematische Darstellung einer Antriebseinheit gemäß einem Ausführungsbeispiel.
Fig. 3 eine schematische Darstellung einer Antriebseinheit gemäß dem beanschpruchten Ausführungsbeispiel.

### Detaillierte Beschreibung von Ausführungsbeispielen

Die Darstellungen in den Figuren sind schematisch und nicht maßstabsgetreu. Werden gleiche Bezugsziffern verwendet, so betreffen diese gleiche oder ähnliche Elemente.

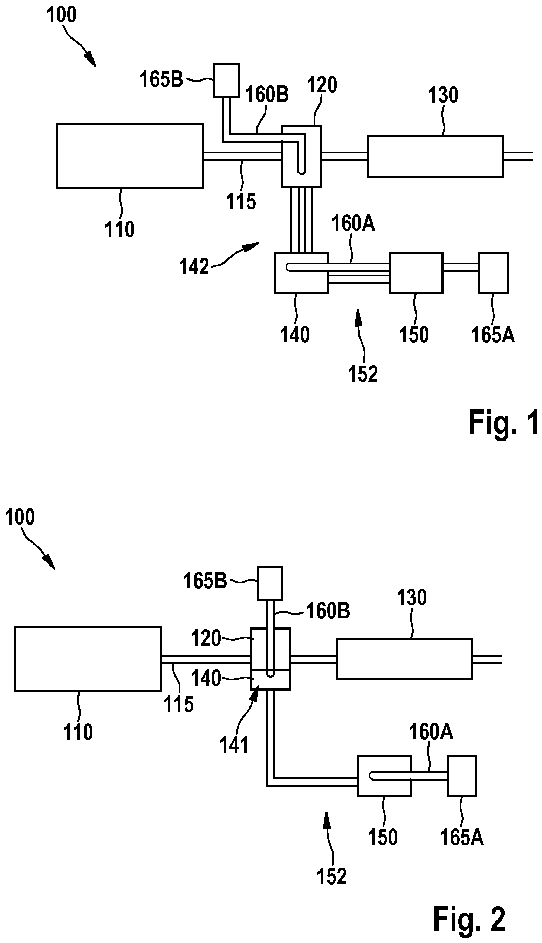

Fig. 1 zeigt eine Antriebseinheit 100 mit einer Verbrennungskraftmaschine 110, einer Elektrokraftmaschine in Form eines Elektromotors 120 und mit einem Getriebe 130 zur Übertragung eines Drehmoments über ein Drehmomentübertragungselement in Form einer Welle 115 zum Antreiben eines Fahrzeugs.

Der Elektromotor 120 ist mit der Welle 115 so gekoppelt, dass ein Drehmoment des Elektromotors alternativ oder zusätzlich zu dem Drehmoment der Verbrennungskraftmaschine 110 auf die Welle 115 beaufschlagt werden kann.

Der Elektromotor 120 wird über einen Inverter 140 mit Energie versorgt, wobei der Inverter 140 ausgeführt ist, über eine zweiphasige Energieübertragungsleitung 152 mit Gleichspannung einer Batterie 150 versorgt zu werden, die Gleichspannung in eine Wechselspannung umzuwandeln und die Wechselspannung über eine dreiphasige Energieübertragungsleitung 142 an den Elektromotor zu übertragen.

Die Antriebseinheit 100 weist zwei Kühlkreisläufe 160A, 160B mit jeweils einem eigenen zugeordneten Wärmetauscher 165A bzw. 165B auf. Der erste Kühlkreislauf 160A ist ausgeführt, Wärmelasten von der Batterie 150 und dem Inverter 140 abzuführen. Der zweite Kühlkreislauf 160B ist ausgeführt, Wärmelasten von dem Elektromotor 120 abzuführen.

Die Trennung der Kühlkreisläufe 160A, 160B kann daraus resultieren, dass der Elektromotor 120 und der Inverter 140 räumlich voneinander getrennt montiert sind. Diese getrennte Montage kann insbesondere nachteilig hinsichtlich der Energieübertragungsleitung 142 sein, welche mechanischen Belastungen durch Vibration und/oder Temperaturschwankungen ausgesetzt sein kann. Daher kann beispielsweise eine regelmäßige Wartung bzw. ein Ersetzen der Energieübertragungsleitung 142 erforderlich sein.

Fig. 2 zeigt eine Antriebseinheit 100, bei der der Elektromotor 120 und der Inverter 140 über einen gemeinsamen Kühlkreislauf 160B verfügen und mechanisch unmittelbar miteinander gekoppelt sind. Der Kühlkreislauf verläuft durch eine Kühlplatte 141 des Inverters 140, wobei die Kühlplatte 141 mechanisch und thermisch so mit dem Inverter 140 gekoppelt ist, dass eine Wärmelast von dem Inverter auf die Kühlplatte übertragen wird und von der Kühlplatte mittels eines Kühlmittels über den Kühlkreislauf abtransportiert wird.

Damit entfällt die Energieübertragungsleitung 142 aus Fig. 1 zur Übertragung der Wechselspannung von dem Inverter 140 zu dem Elektromotor 120. Dies kann neben dem entfallenden Wartungs- und Montageaufwand auch zu einem geringeren Bauraumerfordernis führen, da der Elektromotor 120 und der Inverter 140 ohne eine dazwischen angeordnete Energieübertragungsleitung montiert werden.

Ebenso kann durch diese Anordnung die Gefahr einer undichten Verbindung an den elektrischen Kopplungspunkten zwischen Elektromotor und Inverter reduziert werden, insbesondere da diese elektrische Kopplung durch den Elektromotor und den an dem Elektromotor mechanisch angekoppelten Inverter baulich gegen das Eindringen von Schmutzpartikeln und Feuchtigkeit abgeschirmt ist.

Es verbleibt lediglich die zweiphasige Energieübertragungsleitung 152 von der Batterie 150 zu dem Inverter 140.

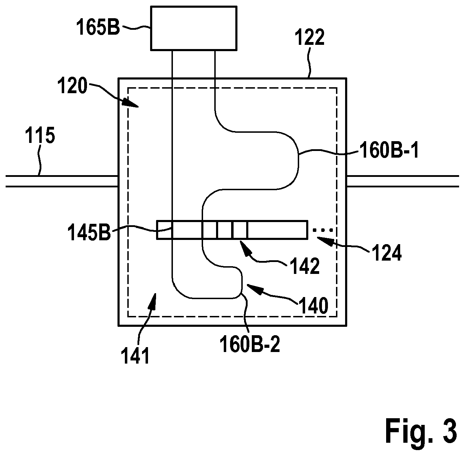

Fig. 3 zeigt einen Elektromotor 120 und einem Inverter 140, welche in einem gemeinsamen Gehäuse 122 angeordnet sind. In anderen Worten sind der Elektromotor und der Inverter als einzelnes Bauteil realisiert.

Zwischen dem Elektromotor 120 und dem Inverter 140 ist ein Kopplungs- bzw. Verbindungselement 124 angeordnet, welches den Elektromotor 120 und den Inverter 140 mechanisch und elektrisch miteinander koppelt. Die elektrische Verbindung 142 ersetzt die Übertragungsleitung 142, wie sie in Fig. 1 gezeigt ist.

Das Kopplungs- und Verbindungselement 124 ist als Flansch ausgeführt und Kühlkanäle 160B-2, welche in einer Kühlplatte 141 des Inverters 140 verlaufen, mit Kühlkanälen 160B-1, welche in dem Elektromotor 120 verlaufen, miteinander verbinden, so dass diese einen gemeinsamen Kühlkreislauf bilden und an einen gemeinsamen Wärmetauscher 165B angeschlossen sind.

## Patentansprüche

1. Antriebseinheit (100) für ein Fahrzeug, aufweisend:
einen Elektromotor (120); und
einen Inverter (140), welcher ausgeführt ist, den Elektromotor (120) mit einer Betriebsspannung zu versorgen;
der Elektromotor (120) und der Inverter (140) an einem gemeinsamen Kühlkreislauf (160B) angeschlossen sind, über welchen die in einem Betriebszustand der Antriebseinheit (100) anfallenden Wärmelasten an dem Elektromotor (120) und an dem Inverter (140) abtransportiert werden,
**dadurch gekennzeichnet, dass**
die Antriebseinheit (100) einen Flansch (124) aufweist, welcher den Inverter (140) mit dem Elektromotor (120) unmittelbar miteinander mechanisch koppelt;
wobei der Flasch (124) den Inverter (140) mit dem Elektromotor (120) über eine elektrische Verbindung (142) elektrisch koppelt, die eine externe elektrische Verbindungsleitung ersetzt und somit auf eine leitungsbasierte Verbindung zwischen dem Inverter (140) und dem Elektromotor (120) vollständig verzichtet; wobei der Flansch (124) einen ersten Abschnitt (160B-1) des gemeinsamen Kühlkreislaufs (160B) mit einem zweiten Abschnitt (160B-2) des gemeinsamen Kühlkreislaufs (160B) verbindet;
wobei der Flasch (124) zwei Durchbrüche aufweist, welche den ersten Abschnitt (160B-1) und den zweiten Abschnitt (160B-2) miteinander verbinden, so dass ein Kühlmittel ungehindert durch den ersten Abschnitt (160B-1) und den zweiten Abschnitt (160B-2) fliessen kann; wobei der erste Abschnitt (160B-1) des gemeinsamen Kühlkreislaufs (160B) angeordnet ist, Wärmelasten von dem Elektromotor (120) abzutransportieren;
wobei der zweite Abschnitt (160B-2) des gemeinsamen Kühlkreislaufs (160B) angeordnet ist, Wärmelasten von dem Inverter (140) abzutransportieren; und
wobei der erste Abschnitt (160B-1) durch den Elektromotor (129) veräuft und der zweite Abschnitt (160B-2) in einer Kühlplatte des Inverters (140) verläuft.

2. Antriebseinheit (100) nach Anspruch 1, wobei der Inverter (140) mit dem Elektromotor (120) so mechanisch gekoppelt ist, dass der Inverter (140) an dem Elektromotor (120) fixiert ist.

3. Antriebseinheit (100) nach einem der Ansprüche 1 oder 2,
wobei die Antriebseinheit (100) ein Gehäuse (122) aufweist;
wobei der Elektromotor (120) und der Inverter (140) gemeinsam innerhalb des Gehäuses (122) angeordnet sind.

4. Antriebseinheit (100) nach Anspruch 3,
weiterhin aufweisend einen Wärmetauscher (165B);
wobei der Wärmetauscher (165B) mit dem gemeinsamen Kühlkreislauf (160B) gekoppelt ist und außerhalb des Gehäuses (122) angeordnet ist.

5. Antriebseinheit (100) nach Anspruch 1,
wobei die elektrische Verbindung (142) eine dreiphasige Hochspannungsverbindung ist.

6. Fahrzeug mit einer Antriebseinheit (100) nach einem der Ansprüche 1 bis 5, wobei die Antriebseinheit (100) ausgeführt ist, das Fahrzeug anzutreiben.

## Claims

1. Drive unit (100) for a vehicle, having:
an electric motor (120); and
an inverter (140), which is designed to supply the electric motor (120) with an operating voltage;
the electric motor (120) and the inverter (140) are connected to a common cooling circuit (160B) via which the thermal loads which occur in an operating state of the drive unit (100) are transported away to the electric motor (120) and to the inverter (140),
**characterized in that**
the drive unit (100) has a flange (124) which mechanically couples the inverter (140) directly to the electric motor (120);
wherein the flange (124) electrically couples the inverter (140) to the electric motor (120) via an electrical connection (142) which replaces an external electrical connecting line and therefore dispenses completely with a line-based connection between the inverter (140) and the electric motor (120);
wherein the flange (124) connects a first section (160B-1) of the common cooling circuit (160B) to a second section (160B-2) of the common cooling circuit (160B);
wherein the flange (124) has two breakthroughs which connect the first section (160B-1) and the second section (160B-2) to one another, with the result that a coolant can flow unimpeded through the first section (160B-1) and the second section (160B-2);
wherein the first section (160B-1) of the common cooling circuit (160B) is arranged so as to transport away thermal loads from the electric motor (120),
wherein the second section (160B-2) of the common cooling circuit (160B) is arranged so as to transport away thermal loads from the inverter (140); and
wherein the first section (160B-1) runs through the electric motor (129), and the second section (160B-2) runs in a cooling plate of the inverter (140).

2. Drive unit (100) according to Claim 1,
wherein the inverter (140) is mechanically coupled to the electric motor (120) in such a way that the inverter (140) is secured to the electric motor (120).

3. Drive unit (100) according to one of Claims 1 or 2, wherein the drive unit (100) has a housing (122); wherein the electric motor (120) and the inverter (140) are arranged together within the housing (122).

4. Drive unit (100) according to Claim 3,
also having a heat exchanger (165B);
wherein the heat exchanger (165B) is coupled to the common cooling circuit (160B) and is arranged outside the housing (122).

5. Drive unit (100) according to Claim 1,
wherein the electric connection (142) is a three-phase high voltage connection.

6. Vehicle having a drive unit (100) according to one of Claims 1 to 5, wherein the drive unit (100) is designed to drive the vehicle.

## Revendications

1. Unité de propulsion (100) pour véhicule comprenant :
un moteur électrique (120) ; et
un onduleur (140) qui est conçu pour alimenter le moteur électrique (120) en tension de fonctionnement ;
le moteur électrique (120) et l'onduleur (140) sont raccordés à un circuit de refroidissement commun (160B) par l'intermédiaire duquel les charges thermiques apparaissant dans un état de fonctionnement de l'unité de propulsion (100) sont éliminées du moteur électrique (120) et de l'onduleur (140),
**caractérisée en ce que** l'unité de propulsion (100) comporte une bride (124) qui couple directement l'un à l'autre de manière mécanique l'onduleur (140) et le moteur électrique (120) ;
dans laquelle la bride (124) couple électriquement l'onduleur (140) au moteur électrique (120) par l'intermédiaire d'une liaison électrique (142) qui remplace une ligne de liaison électrique externe et se passe ainsi complètement d'une liaison par conduction entre l'onduleur (140) et le moteur électrique (120) ;
dans laquelle la bride (124) relie une première partie (160B-1) du circuit de refroidissement commun (160B) à une deuxième partie (160B-2) du circuit de refroidissement commun (160B) ;
dans laquelle la bride (124) comporte deux passages qui relient l'une à l'autre la première partie (160B-1) et la deuxième partie (160B-2), de telle sorte qu'un liquide de refroidissement peut circuler librement à travers la première partie (160B-1) et la deuxième partie (160B-2) ;
dans laquelle la première partie (160B-1) du circuit de refroidissement commun (160B) est disposée de manière à éliminer les charges thermiques du moteur électrique (120) ;
dans laquelle la deuxième partie (160B-2) du circuit de refroidissement commun (160B) est disposée de manière à éliminer les charges thermiques de l'onduleur (140) ; et
dans laquelle la première partie (160B-1) s'étend à travers le moteur électrique (129) et la deuxième partie (160B-2) s'étend à travers une plaque de refroidissement de l'onduleur (140).

2. Unité de propulsion (100) selon la revendication 1, dans laquelle l'onduleur (140) est couplé mécaniquement au moteur électrique (120) de telle sorte que l'onduleur (140) est fixé au moteur électrique (120).

3. Unité de propulsion (100) selon l'une des revendications 1 ou 2,
dans laquelle l'unité de propulsion (100) comporte un boîtier (122) ;
dans laquelle le moteur électrique (120) et l'onduleur (140) sont disposés ensemble à l'intérieur du boîtier (122).

4. Unité de propulsion (100) selon la revendication 3, comprenant en outre un échangeur de chaleur (165B) ; dans laquelle l'échangeur de chaleur (165B) est couplé au circuit de refroidissement commun (160B) et est disposé à l'extérieur du boîtier (122).

5. Unité de propulsion (100) selon la revendication 1,
dans laquelle la liaison électrique (142) est une liaison à haute tension triphasée.

6. Véhicule comportant une unité de propulsion (100) selon l'une des revendications 1 à 5,
dans lequel l'unité de propulsion (100) est conçue de manière à propulser le véhicule.
